(19) Europäisches Patentamt
European Patent Office
Office européen des brevets

(11) **EP 4 224 687 A1**

(12) **EUROPEAN PATENT APPLICATION**

(43) Date of publication:
**09.08.2023 Bulletin 2023/32**

(21) Application number: **22155040.3**

(22) Date of filing: **03.02.2022**

(51) International Patent Classification (IPC):
**H02M 1/00** (2006.01)  **H02M 3/158** (2006.01)
**H02M 7/5387** (2007.01)

(52) Cooperative Patent Classification (CPC):
**H02M 1/007; H02M 1/0095; H02M 7/5387;**
H02M 3/1582

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies Austria AG
9500 Villach (AT)**

(72) Inventors:
• **HUBER, Jonas Emanuel
5000 Aarau (CH)**
• **KOLAR, Johann
8044 Zürich (CH)**
• **MENZL, David
3400 Burgdorf (CH)**

(74) Representative: **Westphal, Mussgnug & Partner,
Patentanwälte mbB
Werinherstraße 79
81541 München (DE)**

(54) **POWER CONVERTER**

(57)    Disclosed is a power converter. The power converter includes first nodes (11, 12); a plurality of second nodes (13a, 13b, 13c); and a plurality of converter units (1a, 1b, 1c). Each of the plurality of converter units (1a, 1b, 1c) includes a first stage (2a, 2b, 2c) coupled to the first nodes (11, 12) and including a switch node (23a, 23b, 23c) of the first stage (2a, 2b, 2c), a second stage (3a, 3b, 3c) coupled to a respective one of the second nodes (13a, 13b, 13c) and including a switch node (33a, 33b, 33c) of the second stage (3a, 3b, 3c), and an inductor (4a, 4b, 4c). The switch node (23a, 23b, 23c) of the first stage (2a, 2b, 2c) is connected to the switch node (33a, 33b, 33c) of the second stage (3a, 3b, 3c), and the inductor (4a, 4b, 4c) is connected between an inductor node (32a, 32b, 32c) of the second stage (3a, 3b, 3c) and one of the first nodes (11, 12).

**Description**

This disclosure relates in general to a power converter and, in particular, a power converter configured to power an electric motor.

Variable Speed Drives (VSDs) for electric motors are a critical element of the infrastructure that supports broad electrification, with electric motors and their drives currently accounting for 45% of the world's total electricity usage. The existing and increasing ubiquity of electric motors demands VSDs that feature a wide operating range and are efficient, cost-effective, power-dense, and tightly integrated.

A variable speed drive for driving a 3-phase motor may include a power converter with three buck-boost converter stages that each include a buck stage, a boost stage and an inductor connected between the buck stage and the boost stage. Each of the converter stages is configured to receive a direct (DC) input voltage and is configured to generate one of three varying voltages received by the motor. In a variable speed drive of this type, the inductors may be subject to high current stress. Inductors capable of bearing such current stress drive cost and size in the power converter of the variable speed drive.

There is a need to provide a power converter that is capable of driving a motor at variable speeds and that is devoid of inductors being subject to high current stress.

One example relates to a power converter. The power converter includes first nodes, a plurality of second nodes, and a plurality of converter units. Each of the plurality of converter units includes a first converter stage coupled to the first nodes and including a switch node, a second converter stage coupled to a respective one of the second nodes and including a switch node, and an inductor, wherein the switch node of the first stage is connected to the switch node of the second stage, and the inductor is connected between an inductor node of the second stage and one of the first nodes.

Examples are explained below with reference to the drawings. The drawings serve to illustrate certain principles, so that only aspects necessary for understanding these principles are illustrated. The drawings are not to scale. In the drawings the same reference characters denote like features.

Figure 1 schematically illustrates one example of a power converter that includes several converter units each including a first converter stage and a second converter stage and that is configured to drive a motor;

Figure 2 illustrates signal diagrams of one example of output voltages provided by the power converter;

Figure 3 illustrates signal diagrams of signals and parameters of an arbitrary one of the converter units;

Figure 4 illustrates a power converter of the type shown in Figure 1 in greater detail;

Figure 5 illustrates signal diagrams of signals for driving the first converter stage in one of the converter units during one drive period;

Figure 6 illustrates signal diagrams of signals for driving the second converter stage in one of the converter units during one drive period;

Figure 7 shows a block diagram of one example of a controller for controlling operation of the power converter;

Figure 8 shows a block diagram of one example of a controller for generating output voltage references based on motor parameters;

Figure 9 shows a block diagram of an arbitrary one of several control units included in the controller;

Figure 10 shows one example of a duty-cycle generator included in the control unit according to Figure 9;

Figure 11 shows one example of a duty-cycle generator included in the control unit according to Figure 9;

Figure 12 shows another example of the control unit according to Figure 9;

Figure 13 shows another example of the control unit according to Figure 9;

Figure 14 shows a modification of the control circuit according to Figure 13; and

Figure 15 shows the power converter according to Figure 1 operating as a rectifier.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

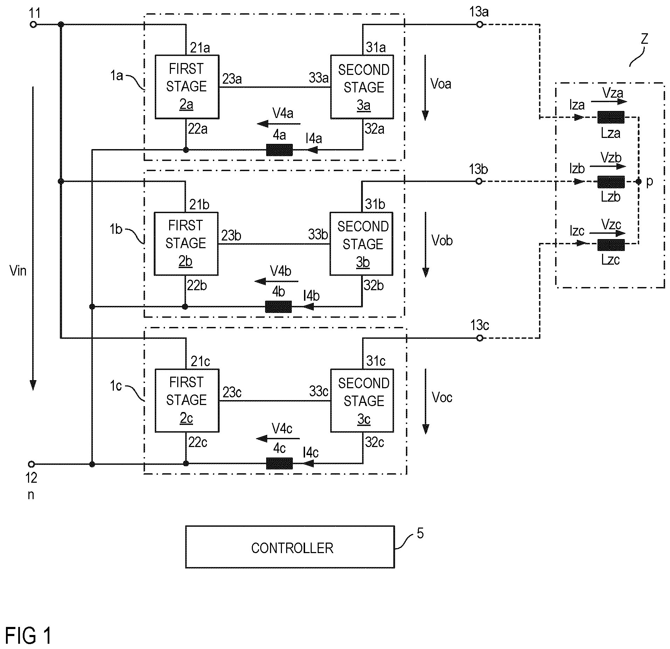

Figure 1 shows a circuit diagram of a power converter according to one example. The power converter includes a pair of first nodes 11, 12, a plurality of second nodes 13a, 13b, 13c, and a plurality of converter units 1a, 1b, 1c. Each of the converter units 1a, 1b, 1c is coupled between the first nodes 11, 12 and a respective one of the second nodes 13a, 13b, 13c and includes a first converter stage 2a, 2b, 2c and a second converter stage 3a, 3b, 3c. Each of the first converter stages 2a, 2b, 2c is coupled to the first nodes 11, 12, and includes a switch node 23a, 23b, 23c, and each of the boost stages 3a, 3b, 3c is coupled to a respective one of the second nodes 13a, 13b, 13c and includes a further switch node 33a, 33b, 33c, wherein the switch node 23a, 23b, 23c of the first converter stage 2a, 2b, 2c is connected to the switch node 33a, 33b, 33c of the second converter stage 3a, 3b, 3c.

Referring to Figure 1, Each of the converter units 1a, 1b, 1c further includes an inductor 4a, 4b, 4c, wherein the inductor 4a, 4b, 4c is connected between an inductor node 33a, 33b, 33c of the second converter stage 3a, 3b, 3c and one of the first nodes 11, 12. Inductances of the inductors 4a, 4b, 4c are selected from between 50 microhenries ($\mu$H) and 500 $\mu$H, for example. Basically, the inductances may be selected dependent on a frequency of a switched mode operation of the first converter stages 2a, 2b, 2c and the second converter stages 3a, 3b, 3c. Typically, the higher the switching frequency, the lower the inductances. Switched mode operations of the first converter stages 2a, 2b, 2c and the second converter stages 3a, 3b, 3c are explained herein further below.

According to one example, each of the first converter stages 2a, 2b, 2c includes a first node 21a, 21b, 21c and a second node 22a, 22b, 22c, wherein the first converter stages 2a, 2b, 2c being coupled to the first nodes 11, 12 of the power converter includes that the first nodes 21a, 21b, 21c of the first converter stages 2a, 2b, 2c are connected to a first one 11 of the first nodes 11, 12 of the power converter, and that the second nodes 22a, 22b, 22c of the first converter stages 2a, 2b, 2c are connected to a second one 12 of the first nodes 11, 12 of the power converter.

In addition to the switch node 33a, 33b, 33c and the inductor node 33a, 33b, 33c, each second converter stage 3a, 3b, 3c includes a further node 31a, 31b, 31c that is connected to a respective one of the second nodes 13a, 13b, 13c of the power converter.

According to one example, the switch node 23a, 23b, 23c of the first converter stage 2a, 2b, 2c being connected to the switch node 33a, 33b, 33c of the second converter stage 3a, 3b, 3c includes that the switch node 23a, 23b, 23c of the first converter stage 2a, 2b, 2c is directly connected to the switch node 33a, 33b, 33c of the second converter stage 3a, 3b, 3c. "Directly connected" includes that, except for an inevitable line inductance of a connection line connecting the first converter stage switch node 23a, 23b, 23c to the second converter stage switch node 33a, 33b, 33c, there is no additional inductance. Thus, a discrete inductor is not connected between the first converter stage switch node 23a, 23b, 23c to the second converter stage switch node 33a, 33b, 33c. The line inductance is lower than 1 $\mu$H, for example.

Referring to Figure 1, the power converter further includes a controller 5. The controller 5 is configured to control operation of the first converter stages 2a, 2b, 2c and the second converter stages 3a, 3b, 3c. Detailed examples of the controller 5 and its functionality are explained herein further below.

The power converter according to Figure 1 may be operated as an inverter. In this case, the power converter receives an input voltage Vin at the first nodes 11, 12 and each of the converter units 1a, 1b, 1c is configured to generate a respective output voltage Voa, Vob, Voc and a respective output current (load current) Iza, Izb, Izc at the respective second node 13a, 13b, 13c.

The second nodes 13a, 13b, 13c are configured to be connected to a load Z. The load Z is a 3-phase motor, for example. A 3-phase motor includes three motor windings, wherein each of these windings is represented by a respective inductor Lza, Lzb, Lzc in the example shown in Figure 1. Each of the windings Lza, Lzb, Lzc is connected between a respective one of the second nodes 13a, 13b, 13c and a common circuit node p. Load voltages (motor voltages) Vza, Vzb, Vzc, which are voltages across the windings Lza, Lzb, Lzc can be regulated by suitably regulating the output voltages Voa, Vob, Voc of the power converter. This is explained in detail herein further below.

In the following, Vz denotes an arbitrary one or an arbitrary group of the load voltages Vza, Vzb, Vzc; and Lz denotes an arbitrary one or an arbitrary group of the load inductances (motor windings) Lza, Lzb, Lzc.

The number of converter units 1 in the power converter equals the number of load voltages Vz that are required to drive the motor. Thus, in the example shown in Figure 1, in which the motor Z includes three windings and is configured to receive three motor voltages Vz, the power converter includes three converter units 1. The power converter, however, is not restricted to be implemented with three converter units 1. Instead, the number of converter units 1 is arbitrary and dependent on the number of windings of the motor Z.

When operating the power converter as an inverter, the first nodes 11, 12 act as input nodes, the second nodes 13a, 13b, 13c act as output nodes, the first converter stages 2a, 2b, 2c act as buck stages, and the second converter stages act as boost stages. In the following, operation of the power converter as an inverter is explained. In this context, the first nodes 11, 12 are also referred to as input nodes; the second nodes 13a, 13b, 13c are also referred to as output nodes; the first converter stages 2a, 2b, 2c are also referred to as buck stages; and the second converter stages 3a, 3b, 3c are also referred to as boost stages. Furthermore, the first nodes 21a, 21b, 21c of the first converter stages 2a, 2b, 2c are also referred to as first input nodes; the second nodes 22a, 22b, 22c of the first converter stages 2a, 2b, 2c are also referred to as second input nodes; the inductor nodes 32a, 32b, 32c of the second converter stages 3a, 3b, 3c are also referred to as return path nodes; and the further nodes 31a, 31b, 31c of the second converter stages 3a, 3b, 3c are also referred to as output nodes.

In the following, when a differentiation between the individual converter units 1a, 1b, 1c, the individual first converter stages (buck stages) 2a, 2b, 2c, and the individual second converter stages (boost stages) 3a, 3b, 3c is not required, reference number 1 denotes an arbitrary one or an arbitrary group of the converter units 1a, 1b, 1c; reference number 2 denotes an arbitrary one or an arbitrary group of the first converter stages (buck stages) 2a, 2b, 2c; reference number 3 denotes an arbitrary one or an arbitrary group of the second converter stages (boost stages) 3a, 3b, 3c; reference number 21 denotes an arbitrary one or an arbitrary group of the first (input) nodes 21a, 21b, 21c of the first converter (buck stages) 2a, 2b, 2c; reference number 22 denotes an arbitrary one or an arbitrary group of the second (input) nodes 22a, 22b, 22c of the first converter stages 2a, 2b, 2c; reference number 23 denotes an arbitrary one or an arbitrary group of the switch nodes 23a, 23b, 23c of the first converter stages (buck stages) 2a, 2b, 2c; reference number 31 denotes an arbitrary one or an arbitrary group of the further nodes (output nodes) 31a, 31b, 31c of the second converter stages (boost stages) 3a, 3b, 3c; reference number 32 denotes an arbitrary one or an arbitrary group of the inductor nodes (return path outputs) 32a, 32b, 32c of the second converter stages (boost stage) 3a, 3b, 3c; reference number 33 denotes an arbitrary one or an arbitrary group of the switch nodes 33a, 33b, 33c of the second converter stages (boost stages) 3a, 3b, 3c; reference number 4 denotes an arbitrary one or an arbitrary group of the inductors 4a, 4b, 4c; and reference number 13 denotes an arbitrary one or an arbitrary group of the second nodes (output nodes) 13a, 13b, 13c of the power converter.

Furthermore, when a differentiation between the individual output voltages Voa, Vob, Voc is not required, Vo denotes an arbitrary one or an arbitrary group of the output voltages Voa, Vob, Voc. Equivalently, when a differentiation between the individual output currents Iza, Izb, Izc is not required, Iz denotes an arbitrary one or an arbitrary group of the output currents Iza, Izb, Izc. According to one example, each of the output voltages Vo is available between the output node 31 and the return path output 32 of a respective one of the boost stages 3.

The type of power converter illustrated in Figure 1, in which the inductors 4 are not connected between the switch nodes 23, 33 of the buck and boost stages 2, 3 but are connected between the return path nodes 32 of the boost stages 3 may be referred to as return-path-inductor (RPI) converter.

According to one example, the input voltage Vin is a direct voltage (DC voltage). A voltage level of the input voltage Vin is selected from between 200 V and 800 V, for example. According to one example, the output voltages Voa, Vob, Voc are offset sinusoidal voltages, which are given by

$$Voa(t) = Voffs + \hat{V}oa \cdot \sin(\omega t + \varphi a) \quad (1a)$$

$$Vob(t) = Voffs + \hat{V}ob \cdot \sin(\omega t + \varphi b) \quad (1b)$$

$$Voc(t) = Voffs + \hat{V}oc \cdot \sin(\omega t + \varphi c) \quad (1c),$$

where Voffs denotes an offset voltage, $\hat{V}oa, \hat{V}ob, \hat{V}oc$ denote amplitudes of sinusoidal components of the output voltages Voa, Vob, Voc, co denotes an angular frequency ($\omega=2\pi f$) of the sinusoidal components of the output voltages Voa, Vob, Voc, and $\varphi a$, cpb, $\varphi c$ denote phases of the sinusoidal components of the output voltages Voa, Vob, Voc. According to one example, the offset voltage Voffs, dependent on the amplitudes $\hat{V}oa, \hat{V}ob, \hat{V}oc,$ is selected such that the output voltages Voa, Vob, Voc are strictly positive, that is, Vo > 0. The offset voltage Voffs defines a common mode voltage Vpn, which is a voltage between the common circuit node p of the motor windings Lza, Lzb, Lzc and the second one of the input nodes 11, 12. According to one example, the input voltage Vin is referenced to the second input node 12, n.

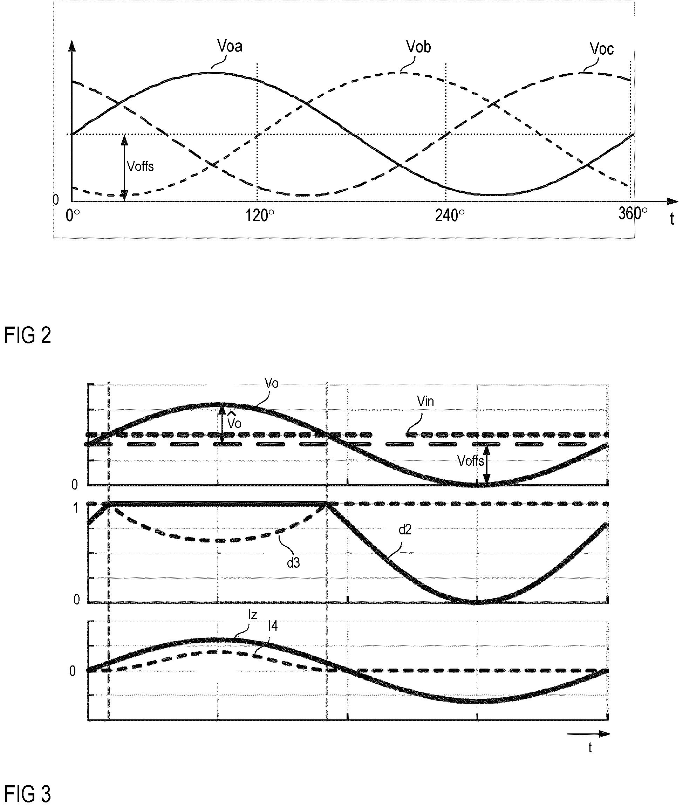

Signal diagrams of output voltages Voa, Vob, Voc which are offset sinusoidal voltages in accordance with equations (1a), (1b), (1c) are illustrated in Figure 2. Figure 2 illustrates the output voltages Voa, Vob, Voc during one period of each of these output voltages Voa, Vob, Voc. A phase shift between the sinusoidal component of each pair of these output voltages Voa, Vob, Voc is 120° (2 $\varphi$/3) in this example. The angular frequency co and the amplitudes $\hat{V}oa, \hat{V}ob, \hat{V}oc$ of the sinusoidal components of the output voltages Voa, Vob, Voc may vary dependent on the load requirements. According to one example, the amplitudes are selected from between 0 and 350V and the frequency f is selected from between 0 and 500 Hz, in particular from between 0 and 100 Hz, for example.

According to one example, the sinusoidal components of the output voltages Voa, Vob, Voc essential equal the load voltages Vza, Vzb, Vzc, that is,

$$Vza(t) \approx \hat{V}oa \cdot \sin(\omega t + \varphi a) \qquad (2a)$$

$$Vzb(t) \approx \hat{V}ob \cdot \sin(\omega t + \varphi b) \qquad (2b)$$

$$Vzc(t) \approx \hat{V}oc \cdot \sin(\omega t + \varphi c) \qquad (2c).$$

Thus, the load voltages Vza, Vzb, Vzc are alternating voltages with positive and negative half-periods. In the negative half-period, the respective load voltage Vza, Vzb, Vzc is negative, and in positive half-period, the respective load voltage Vza, Vzb, Vzc is positive.

Each of the converter units 1 is configured to operate in a buck mode or a boost mode. Whether the converter unit 1 operates in the buck mode or the boost mode is dependent on a relationship between a voltage level of the output voltage Vo and a voltage level of the input voltage Vin. In the buck mode of the converter unit 1, the buck stage 2 operates in a switched mode and the boost stage 3 operates in a static mode or transparent mode. In the boost mode of the converter unit 1, the buck stage 2 operates in a static mode or transparent mode and the boost stage 3 operates in a switched mode. According to one example, the buck stage 2 operating in the static mode (transparent mode) includes that the buck stage 2 passes the input voltage Vin to the boost stage 3, and the boost stage 3 operating in the switched mode includes converting the input voltage Vin received from the buck stage 2 into the output voltage Vo. According to one example, the boost stage 3 operating in the static mode (transparent mode) includes that the boost stage 3 passes a voltage received from the buck stage 2 to the output to provide the output voltage Vo, and the buck stage 2 operating in the switched mode includes converting the input voltage Vin received from the input nodes 11, 12 into the output voltage Vo (which is passed by the boost stage 3 to the output 31).

Operating a converter unit 1 in the buck mode or the boost mode dependent on a relationship between a voltage level of the output voltage Vo and a voltage level of the input voltage Vin is illustrated in Figure 3. Figure 3 shows signal diagrams of signals or parameters that are associated with one of the converter units 1. More specifically, Figure 3 shows signal diagrams of: the output voltage Vo provided by the converter unit 1; the input voltage Vin received by the converter unit 1; a duty cycle d2 of a switched mode operation of the buck stage 2 included in the converter unit 1; a duty cycle d3 of a switched mode operation of the boost stage 3 included in the converter unit 1; the output current (load current) Iz provided by the converter unit 1; and a current 14 through the inductor 4 of the converter unit 1 (wherein 14 denotes an arbitrary one of I4a, I4b, I4c shown in Figure 1.

Basically, the converter unit 1 operates in the buck mode, when the instantaneous voltage level of the output voltage Vo is lower than the voltage level of the input voltage Vin (Vo < Vin), and the converter unit operates in the boost mode, when the instantaneous voltage level of the output voltage Vo is higher than the voltage level of the input voltage Vin (Vo > Vin).

In the signal diagrams according to Figure 3, the converter unit operating in the buck mode is represented by the duty cycle d2 of the buck stage 2 varying between 0 and 1 ($0 \leq d2 < 1$) and the duty cycle of the boost stage 3 being 1 (d3 = 1). That is, the duty cycle d3 =1 represents the static (transparent) mode of the boost stage 3. Furthermore, in the signal diagrams according to Figure 3, the converter unit operating in the boost mode is represented by the duty cycle d3 of the boost stage varying between 0 and 1 ($0 \leq d3 < 1$) and the duty cycle d2 of the buck stage being 1 (d2 = 1). That is, the duty cycle d2 = 1 represents the static (transparent) mode of the buck stage 2.

As can be seen from Figure 3, the load current Iz is an alternating current, such as a sinusoidal current. The frequency of the load current Iz essentially equals the frequency of the sinusoidal component of the respective output voltage Vo and, therefore, essentially equals the frequency of the respective load voltage Vz.

In the example shown in Figure 3, the offset voltage Voffs equals the amplitude $\hat{V}o$ of the sinusoidal component of the output voltage Vo, so that there is a time instance in which the output voltage Vo is zero. This, however, is only an example. According to another example, the offset voltage Voffs is higher than the amplitude $\hat{V}o$.

It should be noted that due to the switched mode operation of the buck stage 2 or the boost stage 3 high-frequent variations of the voltages and currents shown in Figure 3 may occur. A "switched operation" of the buck or boost stages 2, 3 may include operating at least one switch of the buck or boost stage 2, 3 in a plurality of drive cycles such that the switch is in an on-state for on-time and an off-state for an off-time. A switched-mode operation of the buck and boost stages 2, 3 is explained in detail herein further below. Figure 3 illustrates averages of the currents and voltages over the respective drive periods. That is, the instantaneous level represents an average of the level over one drive period.

To be exact, the converter unit 1 operates in the buck mode, when the voltage level of the output voltage Vo plus the voltage level of the inductor voltage V4, which is the voltage across the inductor 4, is lower than the voltage level of the input voltage Vin (Vo+V4 < Vin), and the converter unit operates in the boost mode, when the voltage level of the output voltage Vo plus the voltage level of the inductor voltage V4 is higher than the voltage level of the input voltage Vin (Vo +V4 > Vin). In the steady state, however, the average of the inductor voltage V4 over one drive cycle is zero. Thus, as illustrated in Figure 3, the converter unit 1 operates in the buck mode, whenever Vo < Vin and operates in the boost mode whenever Vo > Vin.

The inductor current 14 according to equation (3) below and as used herein, denotes the low-frequency component of the inductor current, which is a current component having a frequency that is equal to or lower than the sinusoidal component of the respective output voltage Vo. In addition to the low-frequency component, the inductor current may include a high-frequency component resulting from a switched-mode operation of the buck stage 2 or the boost stage 3. Such high-frequency components of the inductor current may occur in the boost mode as well as in the buck mode.

As can be seen from Figure 3, the LF inductor current 14 is essentially 0 when the converter unit operates in the buck mode and is different from zero only when the converter unit operates in the boost mode. The sum of the load currents Iza, Izb, Izc into the common node p is zero, Iza + Izb + Izc =0. In the buck mode, there is no return current via the inductors 4a, 4b, 4c. Thus, a load current flowing via one of the converter units 1a, 1b, 1c to one of the outputs 13a, 13b, 13c and into the load Z is returned via the other two of the output nodes 13a, 13b, 13c and the corresponding converter units 1a, 1b, 1c.

As compared to a conventional converter topology, in which inductors are connected between switch nodes of buck and boost stages, current stress in the inductors 4a, 4b, 4c of the power converter according to Figure 1 is significantly reduced. In the converter according to Figure 1, in each of the converter units 4, the low-frequency inductor current 14 is essentially given by

$$I4(t) = \frac{Iz(t) \cdot (1 - d3(t))}{d3(t)} = \frac{Iz(t)}{d3} - Iz(t) \tag{3a},$$

where Iz denotes the output current provided by the respective converter unit 1, and d3 denotes the duty-cycle of the boost stage 3 of the converter unit, wherein $0 < d3 \leq 1$. Thus, in the buck mode, when the duty-cycle d3 of the boost stage is one (d3=1), the inductor current 14 is zero. In the boost mode, when d3<1, the inductor current 14 is different from zero and proportional to the output current Iz, wherein a proportionality factor between the load current Iz and the inductor current 14 increases as the duty cycle decreases.

In a conventional power converter, in which inductors are connected between switch nodes of buck and boost stage, the inductor current $I4_{con}$ equals the load current when the converter unit operates in the buck mode ($I4_{con}$ = $Iz_{con}$) and is given by $I4_{con}=Iz_{con}/d3_{con}$ in the boost mode, wherein $I4_{con}$ denotes the inductor current in a conventional converter unit, $Iz_{con}$ denotes the load current in the conventional converter unit, and $d3_{con}$ denotes the duty-cycle of a boost stage in the conventional converter unit.

A maximum (an amplitude) Î4 of the inductor current 14 is dependent on an amplitude Îz of the load current Iz and a minimum d3min of the boost stage duty-cycle in the boost mode. In accordance with equation (3a), the maximum of the inductor current 14 is given by

$$\hat{I}4 = \frac{\hat{I}z(1 - d3min)}{d3min} \tag{3b}.$$

If, for example the minimum boost stage duty-cycle d3min is 5/8 (d3min=5/8), the maximum inductor current Î4 is 3/5 times the load current amplitude $(\hat{I}4 = \frac{3}{5}\hat{I}z)$. In the same scenario, the maximum inductor current $\hat{I}4_{con}$ in the conventional power converter would be 8/5 times the load current amplitude Îz $(\hat{I}4_{con} = \frac{8}{5}\hat{I}z_{con})$. Thus, in this scenario, the maximum inductor current $\hat{I}z_{con}$ in the conventional power converter is 8/3 times the maximum inductor current Î4 in the power converter according to Figure 1, in which the inductors are arranged in the return paths of the converter units.

At a given inductance, the physical size of an inductor is approximately proportional to the square of the maximum current the inductor should be able to withstand. Thus, by reducing the maximum inductor current, as in the power converter according to Figure 1, the physical size of the inductors can be reduced as compared to the conventional converter topology, thereby saving resources and cost.

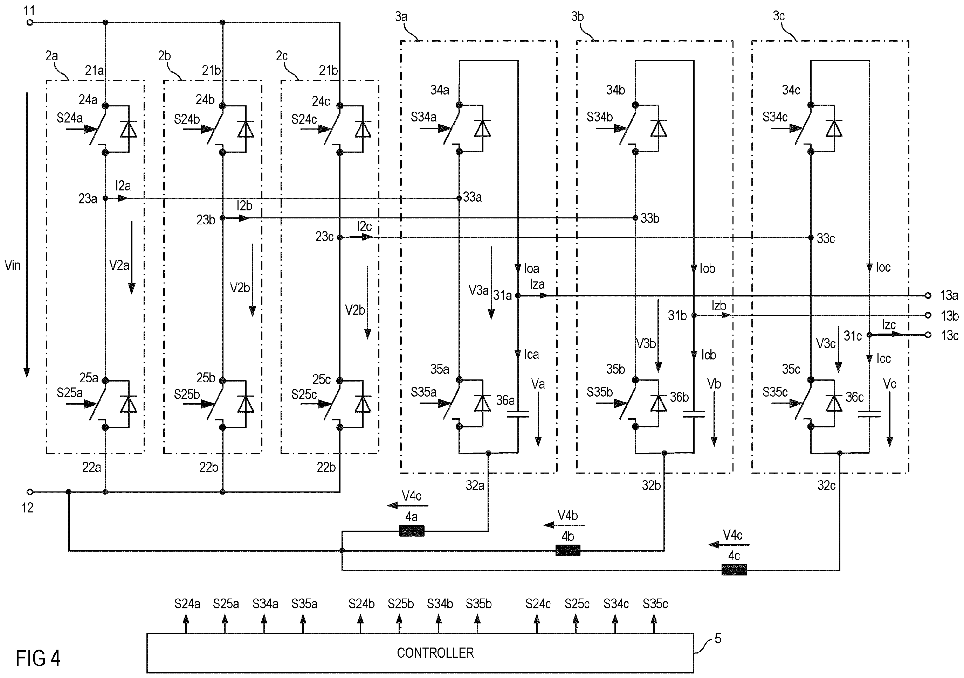

Figure 4 illustrates examples of the buck and boost stages 2, 3 in a greater detail. Referring to Figure 4, each of the buck stages 2a, 2b, 2c includes a first switch 24a, 24b, 24c, which is also referred to as high-side switch in the following, and a second switch 25a, 25b, 25c, which is also referred to as low-side switch in the following. In the following, when a differentiation between the individual buck stages 2a, 2b, 2c is not required, reference number 24 denotes an arbitrary one or an arbitrary group of the first switches 24a, 24b, 24c, and reference number 25 denotes an arbitrary one or an arbitrary group of the second switches 25a, 25b, 25c.

In each of the buck stages 2a, the first switch 24 and the second switch 25 are connected in series between the input nodes 11, 12. A circuit node common to the first and second switches 24, 25, forms the switch node 23 of the respective buck stage 2. The first switch 24 is connected between the first input node 11 and the switch node 23, and the second switch 25 is connected between the switch node 23 and the second input node 12.

Referring to Figure 4, each of the boost stages includes a first switch 34a, 34b, 34c and a second switch 35a, 35b, 35c. In the following, when a differentiation between the individual boost stages 3a, 3b, 3c is not required, reference number 34 denotes an arbitrary one or an arbitrary group of the first switches 35a, 35b, 35c of the boost stages 3a, 3b, 3c, and reference number 35 denotes an arbitrary one or an arbitrary group of the second switches 35a, 35b, 35c of the boost stages 3a, 3b, 3c. In each of the boost stages 3, the first switch 34 and the second switch 35 are connected in series between the output node 31 and the return path output 32. A circuit node common to the first and second switches 34, 35 forms the switch node 33. The first switch 34 is connected between the output node 31 and the switch node 33, and the second switch 35 is connected between the switch node 33 and the return path output node 32.

Furthermore, each of the boost stages 3 includes a capacitor 36 (wherein reference number 36 represents an arbitrary one or an arbitrary group of the capacitors 36a, 36b, 36c illustrated in Figure 4). The capacitor 36 is connected between the output node 31 and the return path node 32.

According to one example, each of the first and second switches 24, 25 in the buck stages 2 and each of the first and second switches 34, 35 in the boost stages 3 is a unidirectionally blocking switch. A "unidirectionally blocking switch" is an electronic switch that, in an off-state, is configured to block when a voltage across the switch has a first polarity and is configured to conduct when the voltage has a second polarity opposite the first polarity. The first and second switches 24, 25, 34, 35 being unidirectionally blocking switches is represented in Figure 4 in that each of the switches 24, 25, 34, 35 includes a switching element and a diode connected in parallel with the switching element. Any type of unidirectionally blocking switch may be used to implement a first and second switch 24, 25, 34, 35 according to Figure 4.

According to one example, the unidirectionally blocking switches are MOSFETs. A MOSFET includes an internal body diode, so that the MOSFET, in the off-state is configured to block when the voltage across a load path (drain-source path) of the MOSFET reverse biases the body diode and is configured to conduct when the voltage across the load path forward biases the body diode. The off-state is an operating state in which the MOSFET receives a drive voltage (gate-source voltage) that interrupts an internal channel in a body region along a gate dielectric of the MOSFET. This is commonly known, so that no further explanation is required in this regard.

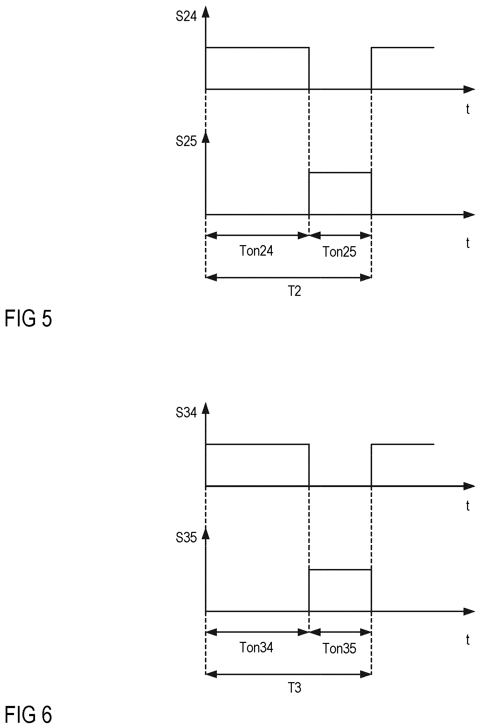

Each of the first and second switches 24, 25, 34, 35 receives a respective drive signal S24, S25, S34, S35 from the controller 5. The controller 5 is configured to control operation of the first and second switches 24, 25 in the buck stages 2 in a complementary fashion, so that only one of these switches 24, 25 is switched on at the same time. This is illustrated in Figure 5.

Figure 5 shows signal diagrams of drive signals S24, S25 for driving a first and second switch 24, 25 in one of the buck stages 2 during one drive period in a PWM (pulse-width modulated) fashion. Each of the drive signals S24, S25 can have an on-level and off-level. The on-level switches on the respective switch and the off-level switches off the respective switch. Just for the purpose of explanation, in the example shown in Figure 5, the on-level is represented by a high signal level and the off-level is represented by a low signal level of the respective drive signal S24, S25. In the switched mode operation of the buck stage 2, the duty cycle d2 illustrated in Figure 3 is the duty cycle of the first switch 24. That is, the duty cycle d2 defines the on-time of the first switch 24 during one drive period T2, so that

$$d2 = \frac{Ton24}{T2} \qquad (4),$$

where Ton24 is the duration of the on-time of the first switch 24 and T2 is the duration of one drive period. The second switch 25 is switched on and off complementarily. In order to avoid a cross current there may be a dead time between switching off one of the two switches 24, 25 and switching on the other one of the two switches 24, 25. Such dead time, however, is not illustrated in Figure 5. During the dead time, the freewheeling element (represented by the diode) of one of the first and second switches 24, 25 takes over the current provided at the switch node 23 of the respective buck stage 2.

The buck stages 2 are operated in the way illustrated in Figure 5 in a plurality of successive drive cycles, wherein, due to the varying duty cycle d2, time durations in which the first and second switches 24, 25 are switched on, may vary.

According to one example, durations T2 of the drive cycles are fixed, so that the buck stages 2 are operated at a fixed switching frequency. The switching frequency f2 is given by the reciprocal of the duration of one drive cycle, f2 = 1/T2. According to one example, the switching frequency f2 is selected from between several kilohertz (kHz) and several 100 kHz. According to one example, the switching frequency f2 is selected to be much higher than the maximum frequency of the sinusoidal components of the output voltages Vo, such as at least 10 times or at least 100 times the maximum frequency of the sinusoidal components of the output voltages Vo.

Furthermore, the controller 5 is configured to control operation of the first and second switches 34, 35 in the boost stages 3 in a complementary fashion, so that only one of these switches 34, 35 is switched on at the same time. This is illustrated in Figure 6.

Figure 6 shows signal diagrams of drive signals S34, S35 for driving a first and second switch 34, 35 in one of the buck stages 3 during one drive period in a PWM (pulse-width modulated) fashion. Each of the drive signals S34, S35 can have an on-level and off-level. The on-level switches on the respective switch and the off-level switches off the respective switch. Just for the purpose of explanation, in the example shown in Figure 6, the on-level is represented by a high signal level and the off-level is represented by a low signal level of the respective drive signal S34, S35. In the switched mode operation of the boost stage 3, the duty cycle d3 illustrated in Figure 3 is the duty cycle of the first switch 34. That is, the duty cycle d3 defines the on-time of the first switch 34 during one drive period T3, so that

$$d3 = \frac{Ton34}{T3} \tag{5},$$

where Ton34 is the duration of the on-time of the first switch 34 and T3 is the duration of one drive period. The second switch 35 is switched on and off complementarity. In order to avoid a cross current there may be a dead time between switching off one of the two switches 34, 35 and switching on the other one of the two switches 34, 35. Such dead time, however, is not illustrated in Figure 6. During the dead time, the freewheeling element (represented by the diode) of one of the first and second switches 34, 35 takes over the current provided at the switch node 33 of the respective boost stage 3.

The boost stages 3 are operated in the way illustrated in Figure 6 in a plurality of successive drive cycles, wherein, due to the varying duty cycle d3, time durations in which the first and second switches 34, 35 are switched on, may vary.

According to one example, durations T3 of the drive cycles are fixed, so that the boost stages 3 are operated at a fixed switching frequency. The switching frequency f3 is given by the reciprocal of the duration of one drive cycle, f3 = 1/T3. According to one example, the switching frequency f3 is selected from between several kilohertz (kHz) and several 100 kHz and is selected to be much higher than the maximum frequency of the sinusoidal components of the output voltages Vo. The buck stages 2 and the boost stages 3 may be operated at the same switching frequency or at different switching frequencies.

Referring to the above, the converter units 1 operate in the buck mode or the boost mode dependent on a relationship between the voltage level of the input voltage Vin and the voltage level of the respective output voltage Vo. At the same time, one of the converter units 1 may operate in the boost mode while the other two converter units operate in the buck mode, or one of the converter units 1 may operate in the buck mode while the other two converter units operate in the boost mode.

Operating one of the converter units 1 in the buck mode and the boost mode is briefly explained with reference to Figure 4 in the following.

Referring to the above, in the buck mode, the first switch 34 of the boost stage 3 is on in order to operate the boost stage 3 in the static mode (transparent) mode. Furthermore, in the buck mode, the first and second switches 24, 25 in the buck stage 2 are operated in a PWM fashion. In the buck mode, the output voltage Vo of one converter unit essentially equals a switch node voltage V2 at the switch node 23 of the respective buck stage 2 (wherein V2 denotes an arbitrary one of voltages V2a, V2b, V2c shown in Figure 4). The switch node V2 voltage is referenced to the second input node 12. The voltage level of the switch node voltage is defined by the duty-cycle d2 of the switched-mode operation of the buck stage 2, wherein V2=d2 · Vin.

Referring to the above, in the boost mode, the first switch 24 of the buck stage 2 is on in order to operate the buck stage 2 in the static mode (transparent) mode. The switch node voltage V2 equals the input voltage Vin in this operating mode. Furthermore, in the boost mode, the first and second switches 34, 35 in the boost stage 3 are operated in a PWM fashion in order to generate the output voltage Vo to be higher than the input voltage Vin. During one drive period, the inductor current 14 increases whenever the second switch 35 is in the on-state and decreases whenever the first switch 34 is in the on-state (Figure 3 illustrates the average of the inductor current 14 over the respective drive cycles, so that such increase and decrease is not illustrated). The voltage level of the output voltage Vo is defined by the input voltage Vin and the duty-cycle, wherein Vo=Vin/d3.

In both operating modes, buck mode and boost mode, the output current Iz provided by one converter unit 1 can be positive or negative. Whether the output current Iz at a certain output node 13 is positive or negative is dependent, inter alia, on a phase shift between the sinusoidal component of the output voltage Vo and the output current Iz. It should be noted in this regard, that driving the motor Z by the power converter is not restricted to providing power to the motor Z. By suitably adjusting the output voltages Voa, Vob, Voc the motor Z can also be operated in such a way that the rotational speed is reduced and power is fed back from the motor Z via the power converter to the input nodes 11, 12 and a power source (not illustrated) connected to the input nodes 11, 12.

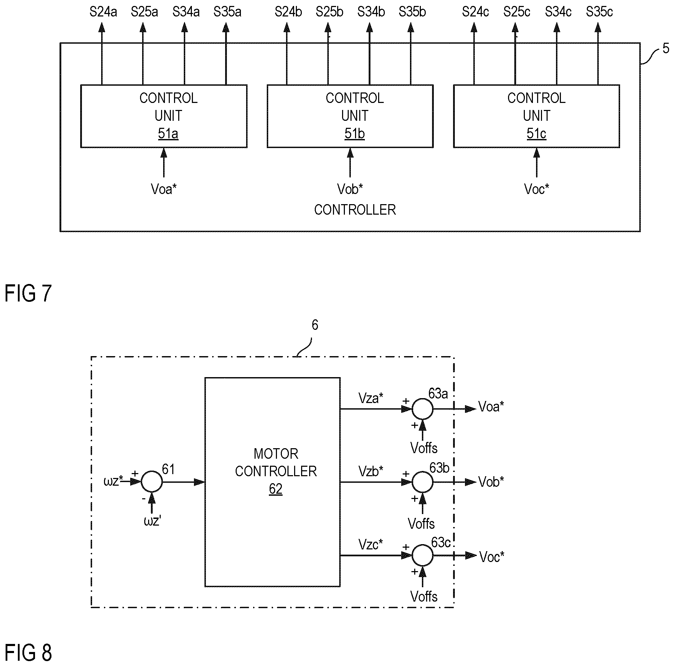

Figure 7 shows a block diagram of a controller according to one example. It should be noted that Figure 7 and the following figures illustrate functional blocks of the controller 5 and of parts of the controller 5 rather than a specific implementation. Those functional blocks can be implemented in various ways. According to one example, these functional blocks are implemented using dedicated circuitry. According to another example, the controller 5 is implemented using hardware and software such as a microcontroller and software executed by microcontroller.

Furthermore, in the following, "voltage reference" or "current reference" denote a desired voltage or current level of a respective voltage or current, and "measured voltage" or "measured current" denotes a measured voltage or current level. Such measured voltages or currents can be can obtained by measuring the respective voltage or current using any kind of conventional voltage or current measurement circuit. Such voltage or current measurement circuits are not shown in the figures.

Referring to Figure 7, the controller 5 includes a plurality of control units 51a, 51b, 51c. Each of these control units 51a, 51b, 51c is configured to control operation of a respective converter unit 1 by generating the drive signals S24, S25 received by the buck stage 2 of the converter unit 1 and the drive signals S34, S35 received by the boost stage 3 of the converter unit 1. In the following, reference number 51 denotes an arbitrary one or an arbitrary group of the control units 51a, 51b, 51c.

Each of the control units 51 receives a respective output voltage reference Vo∗, which represents a desired (instantaneous) voltage level of the output voltage Vo of the converter unit 1 controlled by the respective controller. That is, for example, control unit 51a controlling operation of converter unit 1a receives output voltage reference Voa∗ which represents a desired voltage level of the output voltage Voa provided by converter unit 1a. The control units 51 are configured to control operation of the converter units 1 such that the output voltages Vo are in correspondence with the output voltage references Vo∗.

The output voltage references Vo∗ may be generated in various ways. One example of a controller 6 that is configured to generate the output voltage references Vo∗ is illustrated in Figure 8. The controller 6 may be included in controller 5 (and integrated in the same microcontroller) or may be a controller in addition to the controller 5.

The controller 6 is configured to control the rotational speed coz of the motor Z. For this a rotational speed error $\Delta\omega z$ is calculated by subtracting a measured rotational speed $\omega z'$ from a rotational speed reference $\omega z^*$ by a subtractor 61. The rotational speed reference $\omega z^*$ represents a desired rotational speed and the measured rotational speed $\omega z'$ represents an instantaneous rotational speed obtained by measuring the rotational speed coz of the motor Z. In the steady state, the rotational speed coz of the motor Z is essentially proportional to the frequency $\omega$ of the sinusoidal components of the output voltages Vo, wherein a proportionality factor is dependent on a number of pole pairs of the motor, for example, or may also be dependent on the delivered torque (slip frequency) in case of asynchronous motors, for example.

A motor controller 62 receives the rotational speed error $\Delta\omega z$ and calculates load voltage references Vza∗, Vzb∗, Vzc∗ based on the rotational speed error $\Delta\omega z$. In addition to the rotational speed error $\Delta\omega z$, the motor controller 62 may consider torque requirements, so that the motor controller 62 generates the load voltage references Vza∗, Vzb∗, Vzc∗ based on the rotational speed error $\Delta\omega z$ and the torque requirements. A motor controller of this type is known so that no further explanation is required in this regard.

Referring to Figure 8, the controller 6 further includes adders 63a, 63b, 63c wherein each of these adders 63a, 63b, 63c receives a respective one of the load voltage references Vza∗, Vzb∗, Vzc∗ and adds the offset Voffs in order to provide a respective one of the output voltage references Voa∗, Vob∗, Voc∗. The offset may be selected in various ways.

(a) According to one example, the offset Voffs is fixed and, dependent on an expected voltage range of the input voltage Vin and an expected amplitude range of amplitudes of the load path voltage references is selected such that output voltage references Voa∗, Vob∗, Vc∗ are strictly positive. The offset voltage Voffs may be selected to be equal to the input voltage, for example.

(b) According to another example the offset voltage Voffs (as illustrated in Figure 3) is selected to be equal to a desired amplitude $\hat{V}z$ of the motor voltages Vza, Vzb, Vzc,

$$Voffs(t) = \hat{V}z \qquad\qquad (6).$$

In this example, the offset voltage Voffs varies dependent on the load requirements.

(c) According to another example, adjusting the offset voltage Voffs includes detecting that one of the load path voltages Vza, Vzb, Vzc that instantaneously has the lowest voltage level, negating the lowest voltage level, and setting the offset voltage Voffs to be equal to the negated lowest voltage level,

$$Voffs(t) = -\min(Vza(t), Vzb(t), Vzc(t)) \qquad (7),$$

where min(.) denotes a minimum operator that outputs the minimum of the values given in brackets.

Adjusting the offset voltage Voffs in accordance with equation (7) has the effect that each time one of the three converter units 1 can be operated in a static mode, that is, the buck stage 2 and the boost stage 3 are operated in the static mode. This is explained in the following. If for example, load voltage Vza has the lowest level, the offset voltage Voffs is selected to be -Vza (wherein Vza < 0). Referring to the above, the output voltage Vo of each converter unit is given by the load path voltage Vz plus the offset voltage Voffs (Vo=Vz + Voffs). Thus, selecting the offset voltage Voffs to be -Vza, for example, has the effect that the output voltage Voa of the converter unit 1a is 0, Voa = Vza + (-Vza) = 0. Thus, as long as output voltage Vza has the lowest level, the output voltage Voa is 0, so that converter unit 1a can be operated in the static mode.

Operating the converter unit 1a in the static mode (clamped mode) includes permanently switching on the first switch 34a in the boost stage 3a, so that the boost stage duty cycle d3a is 1 (d3a=1) and permanently switching on the second switch 25a in the buck stage 2a, so that buck stage duty cycle d2a is 0. Alternatively, both switches 34a, 35a in the boost stage may be switched on in order to operate the converter unit in the static mode.

In the same way, during other time periods within one period of the load voltages Vza, Vzb, Vzc converter units 1b, 1c can be operated in the clamped mode. Operating one of the converter units 1a, 1b, 1c in the clamped mode reduces overall switching losses of the power converter.

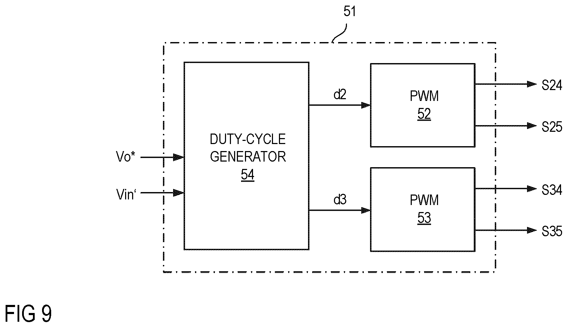

Figure 9 illustrates one example of an arbitrary one of the control units 51. The control unit according to Figure 9 includes a duty cycle generator 54 that is configured to receive the respective output voltage reference Vo* and the measured input voltage Vin' and to calculate the buck stage duty-cycle d2 and the boost stage duty-cycle d3 based on the output voltage reference Vo* and the measured input voltage Vin'. A first PWM modulator 52 receives the buck stage duty-cycle d2 and generates the drive signals S24, S25 for driving the first and second switches 24, 25 in the buck stage 2 in accordance with equation (4) and Figure 5 and the corresponding description. A second PWM modulator 53 receives the boost stage duty-cycle d3 and generates the drive signals S34, S35 for driving the first and second switches 34, 35 in the boost stage 3 in accordance with equation (5) and Figure 6 and the corresponding description.

According to one example, the duty cycle generator 54 generates the buck stage duty-cycle d2 and the boost stage duty-cycle d3 as follows,

$$d2 = \min(1, m) \qquad (8a)$$

$$d3 = \min\left(1, \frac{1}{m}\right) \qquad (8b),$$

where min(.) denotes a minimum operator that outputs the minimum of the two values given in brackets, and m denotes the modulation index, which is given by

$$m = \frac{Vo^*}{Vin'} \qquad (9).$$

Referring to the above, at each time one of the converter units 1 can be operated in the static mode by suitably selecting the offset voltage Voffs. If for example, converter unit 1a is to be operated in the static mode, the offset voltage Voffs is selected such that the output voltage Voa is zero (Voa=0). At the same time, the output voltage reference Voa* may be set to zero (Voa*=0), so that the modulation index ma=Voa*/Vin'=0. In this case, based on equations (8a), (8b) the corresponding buck stage and boost stage duty-cycles are d2a=0 and d3a=1 so that based on Voa*=0 converter unit 1a automatically operates in the static mode.

When calculating the buck stage duty-cycle d2 and the boost stage duty-cycle d3 in accordance with equations (8a), (8b), (9) two scenarios may occur dependent on whether the modulation index m is between 0 and 1 (0 < m < 1), or higher than 1 (m>1).

(1) The modulation index m is between 0 and 1 whenever the input voltage Vin is higher than the desired output voltage Vo* (Vin>Vo*). In this case, the reciprocal 1/m of the modulation index m is higher than 1 (1/m > 1), so that d3 = min(1, 1/m) = 1. Thus, the boost stage 3 operates in the static mode (transparent mode) with the first switch 34 being permanently on and the second switch 35 being permanently off. The buck stage duty-cycle d2 is between 0 and 1 (0 < d2 < 1), so that the buck stage 2 operates in the switched mode (PWM mode). In the switched mode of the buck stage 2, the smaller the modulation index m, that is the higher the input voltage Vin relative to the desired output voltage Vo*, the shorter the on-duration Ton24 of the first switch 24 within one drive cycle.

(2) The modulation index m is higher than 1 whenever the input voltage Vin is lower than the desired output voltage Vo* (Vin<Vo*). In this case, the modulation index m is higher than 1 (m > 1), so that d2 = min(1, m) = 1. Thus, the buck stage 2 operates in the static mode (transparent mode) with the first switch 24 being permanently on and the second switch 25 being permanently off. The boost stage duty-cycle d3 is between 0 and 1 (0 < d3 < 1), so that the boost stage 3 operates in the switched mode (PWM mode). In the switched mode of the boost stage, the smaller the reciprocal 1/m of the modulation index m, that is the higher the desired output voltage Vo* relative to the input voltage Vin, the shorter the on-duration Ton34 of the first switch 34 and the longer the on-duration Ton35 of the second switch 35 within one drive cycle.

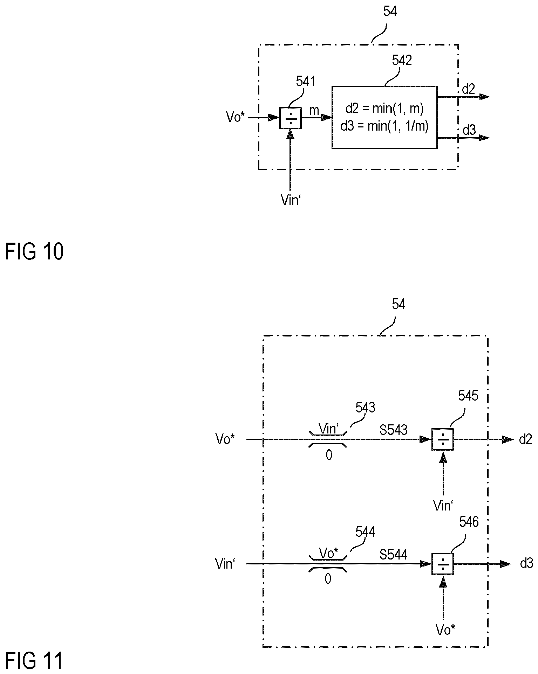

Figure 10 illustrates one example of the duty cycle generator 54. The duty cycle generator according to Figure 10 includes a divider 541 that is configured to calculate the modulation index m based on the desired output voltage Vo* and the measured input voltage Vin', and a calculator that is configured to calculate the buck stage and boost stage duty-cycles d2, d3 based on the modulation index m in accordance with equations (6a) and (6b).

Figure 11 illustrates another example of the duty cycle generator, wherein the each of the calculations according to equations (6a, 6b) is implemented using a limiter 543, 544 and a divider 545, 546 connected downstream the limiter 543, 544.

A first limiter 543 receives the output voltage reference Vo* as an input signal and the measured input voltage Vin' as a limiting signal and outputs a first limiter output signal S543 dependent on a relationship between the output voltage reference Vo* and the measured input voltage Vin'. A first divider 545 divides the first limiter output signal S543 by the measured input voltage Vin' to generate the buck stage duty cycle d2.

(i) The first limiter 543 is configured to output the output voltage reference Vo* as the first limiter output signal S543 (S543=Vo*) whenever the output voltage reference Vo* is lower than the measured input voltage Vin', so that the converter unit 1 is to operate in the buck mode. In this case, the buck stage duty cycle d2 equals the modulation index (d2=m=Vo*/Vin').

(ii) Furthermore, the first limiter 543 is configured to output the measured input voltage Vin' as the first limiter output signal S543 (S543=Vin') whenever the output voltage reference Vo* is higher than the measured input voltage Vin', so that the converter unit 1 is to operate in the boost mode. In this case, the buck stage duty cycle d2 equals 1 (d2=1), so that the buck stage 2 operates in the static mode (transparent mode).

Referring to Figure 11, a second limiter 544 receives the measured input voltage Vin' as an input signal and the output voltage reference Vo* as a limiting signal and outputs a second limiter output signal S544 dependent on a relationship between the measured input voltage Vin' * and the output voltage reference Vo*. A second divider 546 divides the second limiter output signal S544 by the output voltage reference Vo* to generate the boost stage duty cycle d3.

(iii) The second limiter 544 is configured to output the measured input voltage Vin' as the second limiter output signal S544 (S544=Vin') whenever the measured input voltage Vin' is lower than the output voltage reference Vo*, so that the converter unit 1 is to operate in the boost mode. In this case, the boost stage duty cycle d3 equals the reciprocal 1/m of the modulation index (d3=1/m=Vin'/Vo*).

(iv) Furthermore, the second limiter 544 is configured to output the output voltage reference Vo* as the second limiter output signal S544 (S543=Vo*) whenever the output voltage reference Vo* is lower than the measured input voltage Vin', so that the converter unit 1 is to operate in the buck mode. In this case, the boost stage duty cycle d3 equals 1 (d3=1), so that the boost stage 2 operates in the static mode (transparent mode).

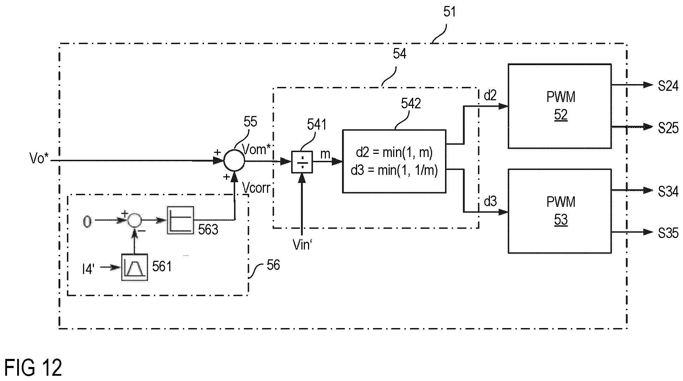

Referring to the above, the converter units 1 may simply be controlled based on the output voltage references Voa*, Vob*, Voc*, so that the inductor currents I4a, I4b. I4c do not have to be controlled. However, in some cases ringing may occur between the inductors 4a, 4b, 4c and the capacitors 36a, 36b, 36c. In order to avoid such ringing active damping can be introduced as illustrated in Figure 12.

Figure 12 shows a modification of the control unit shown in Figure 9. In the control unit 51 according to Figure 12, the modulation index m and, therefore, the buck and boost stage duty cycles d2, d3 are calculated based on a modified output voltage reference Vom* instead of the output voltage reference Vo*. The modified output voltage reference Vom* is obtained by adding a correction value Vcorr to the output voltage reference Vo* by an adder 55.

The correction value Vcorr is generated by a regulator 56. Regulator 56 is configured to reduce or even cancel HF current components of the inductor current 4, wherein HF current components are current components having a frequency higher than the frequency of the load voltages Vza, Vzb, Vzc and load currents Iza, Izb, Izc. For this, a filter (controller) 561 receives the measured inductor current 14' and outputs a filter signal S561, wherein the HF signal includes HF current components of the filtered inductor signal 14'. Filter 561 is a high-pass filter or a bandpass filter, for example. The filter signal S561 is negated (by a subtractor 562) and the negated filter signal S562 is received by a further filter 563 which outputs the correction signal Vcorr based on the negated filter signal S562. The further filter has a proportional (P) characteristic or a proportional-integral (PI) characteristic, for example. By measuring the inductor current 14 and adding a correction value to the output voltage reference Vo* such that the correction value Vcorr is based on negated high-frequency current components of the inductor current 14, these high-frequency current components can be reduced or even eliminated.

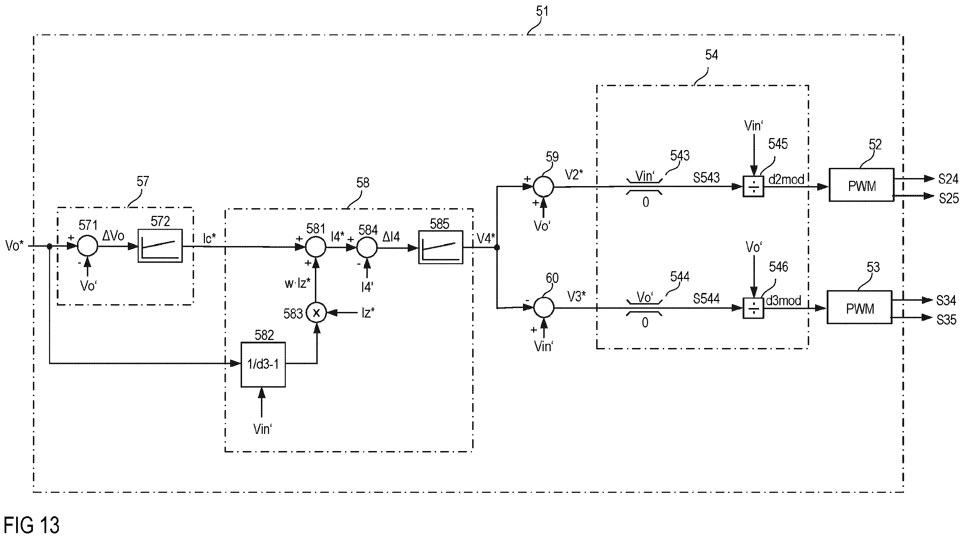

Figure 13 illustrates a further modification of the control unit 51 shown in Figure 9. The control unit according to Figure 13, in addition to controlling the output voltages Vo controls the inductor currents 14 in order to avoid oscillations (ringing).

The control unit 51 according to Figure 13 includes an output voltage controller 57 that is configured to output a capacitor current reference Ic*. The capacitor current reference Ic* represents a desired current Ic into the capacitor 36 of the boost stage 3 (wherein Ic represents an arbitrary one of the capacitor currents Ica, Icb, Icc shown in Figure 4). Referring to the above, the output voltage Vo is available across the capacitor 56, so that the capacitor current Ic directly controls the output voltage Vo.

Referring to Figure 13, the capacitor current reference Ic* is provided by a filter (controller) 572 that receives an output voltage error signal ΔVo. The filter 572 has a proportional (P) or proportional-integral (PI) characteristic, for example. The output voltage error ΔVo represents a difference between the output voltage reference Vo* and the measured output voltage Vo' and is provided by a subtractor 571, for example.

Referring to Figure 13, the control unit 51 further includes an inductor current controller 58. The inductor current controller 58 receives the capacitor current reference Ic* and includes an adder 581 that adds the capacitor current reference Ic* to a weighted output current reference w·Iz* in order to obtain an inductor current reference I4*. The weighted output current reference w·Iz* is obtained by multiplying an output current reference (load current reference) Iz* with a weighting factor w by a multiplier 583. The weighting factor is given by

$$w = \frac{1 - d3}{d3} \qquad (10)$$

and is calculated by a calculator 582 based on the output voltage reference Vo* and the measured input voltage Vin'. d3 denotes the boost stage duty-cycle and is dependent on the output voltage reference Vo* and the measured input voltage Vin' in accordance with equation (8b). The output current reference Iz* is provided by the motor controller (62 in Figure 8) in addition to the load voltage reference Vz*, for example. The weighted output current reference w·Iz* is 0 in the buck mode (when d3=0) and different from zero in the boost mode.

Referring to Figure 13, a further adder 584 subtracts the measured inductor current 14' from the inductor current reference I4* in order to obtain an inductor current error signal ΔI4. The inductor current error signal ΔI4 represents a deviation of the inductor current 14 from a desired inductor current. A filter (controller) 585 receives the inductor current error signal ΔI4 and generates an inductor voltage reference V4*. The filter 583 has one of a proportional (P) or proportional-integrative (PI) characteristic, for example. The inductor voltage reference V4* represents the inductor voltage V4 that is required in order to achieve an inductor current 14 that is in accordance with the inductor current reference I4*.

Referring to Figure 13, a first adder 59 adds the inductor voltage reference to the measured output voltage Vo' and a subtractor 60 subtracts the inductor voltage reference V4* from the measured input voltage Vin'. The output signal of the adder 59 represents a voltage reference of a voltage between the output node 31 of the boost stage 3 and the second input node 12. In the buck mode, when the first switch 34 in the boost stage 3 is permanently switched on, this voltage equals a switch node voltage V2 (wherein V2 represents an arbitrary one of voltages V2a, V2b, V2c according to Figure 4) of the buck stage 2. The switch node voltage V2 is the voltage between the switch node 23 and the second input node 12. Thus, the output signal of the first adder 59, which defines the duty-cycle of the buck stage is the switch node voltage reference V2* of the buck stage 2.

The output signal of the subtractor 60 represents a voltage reference of a voltage between the first input node 11 and the return path output of the boost stage 3. In the boost mode, when the first switch 24 in the buck stage 2 is permanently switched on, this voltage equals a switch node voltage V3 (wherein V3 represents an arbitrary one of voltages V3a, V3b, V3c according to Figure 4) of the boost stage 3. The switch node voltage V3 is the voltage between the switch node 33 and the return path output 32. Thus, the output signal of the subtractor, which defines the duty-cycle of the boost stage 3 is the switch node voltage reference V3* of the boost stage 3.

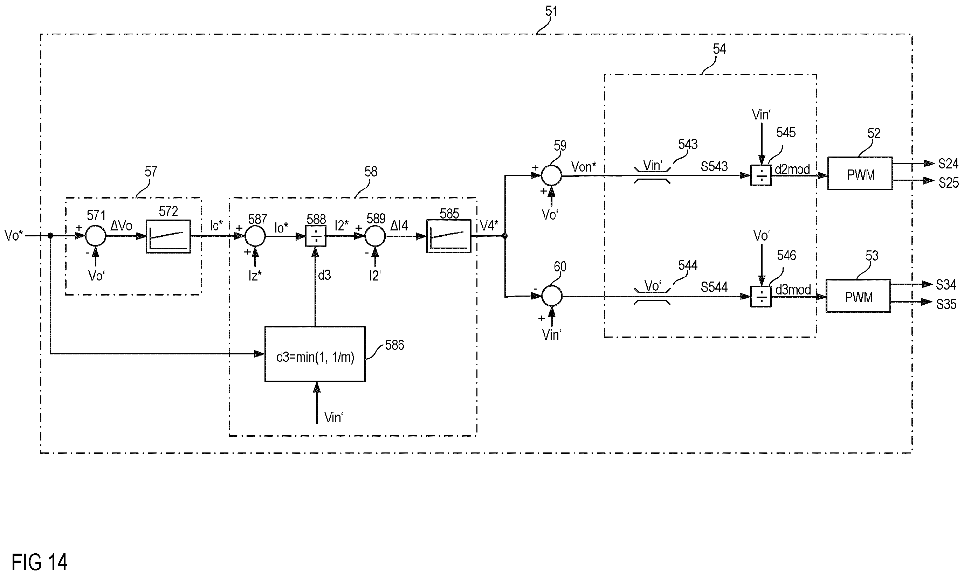

In the converter unit 51 according to Figure 14, the first limiter 543 of the of the PWM generator 54 receives, as an input signal, the output signal of the first adder 59 instead of the output voltage reference Vo* and the measured input voltage Vin' as the limiting signal. Furthermore, the second limiter 544 of the of the PWM generator 54 receives, as an input signal, the output signal of the second adder 60 instead of the measured input voltage Vin' and the output voltage reference Vo* as the limiting signal.

The buck stage and boost stage duty-cycles provided by the duty cycle generator 54 according to Figure 13 may (slightly) deviate from the duty-cycles calculated in accordance with equations (6a) and (6b) and are therefore referred to as d2mod and d3mod, respectively. The PWM modulators 52, 53 generate the drive signals S24, S25 and S34, S35 based on these duty-cycles d2mod and d3mod in accordance with the explanations provided in context with Figures 5 and 6.

Figure 14 illustrates a further modification of the control unit 51 shown in Figure 13. In the control unit according to Figure 14, the inductor voltage controller 58 is different from the inductor voltage controller 58 according to Figure 13 in that the capacitor current reference Ic* is added to an output current reference (load current reference) Iz* by an adder 587 in order to obtain a boost stage output current reference Io*. A divider 588 divides the boost stage output current reference Io* by the boost stage duty-cycle d3, which is generated by a calculator 586 based on the output voltage reference Vo* and the measured input voltage Vin' in accordance with equation (8b).

An output signal of the divider 588 represents a switch node current reference I2*. Referring to Figure 4, the switch node current 12 (wherein 12 denotes an arbitrary one of switch node currents I2a, I2b, I2c) is a current between the switch nodes 23, 33 of the buck stages 2 and boost stages 3. Furthermore, a subtractor 589 subtracts the measured switch node current 12' from the switch node current reference I2*, wherein an output signal of the subtractor 589 represents the inductor current error signal ∆I4.

In the inverter mode, the power converter explained above is not restricted to driving a motor. According to another example (not shown), the power converter is operated to supply power from a power source, such as a battery or a solar panel, into a power grid, such as a 3-phase power grid. In this example, the load Z is a power grid instead of a motor, and the output voltage references Voa*, Vob*, Voc* are generated, for example, by a grid current controller. Similar to the motor windings Lza, Lzb. Lzc, an inductor may be connected between each of the output nodes 13a, 13b, 13c and a respective phase of the power grid.

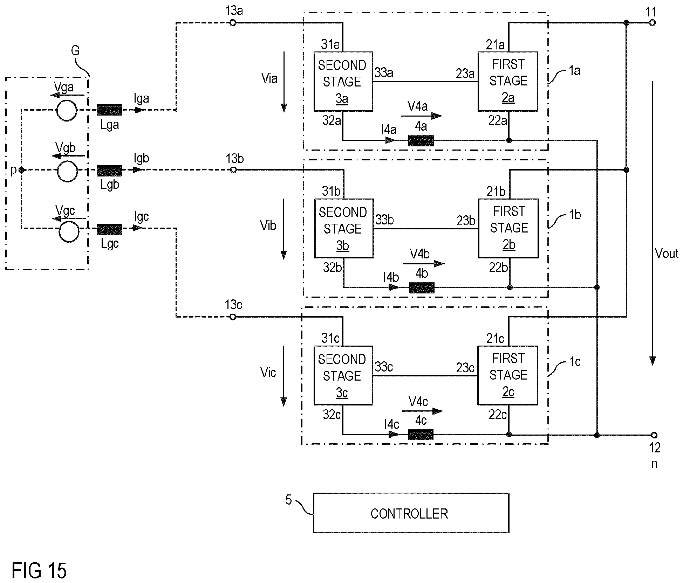

Referring to Figure 15, the power converter may also be operated in a rectifier mode. In the rectifier mode, the second nodes 13a, 13b, 13c act as input nodes and are configured to be connected to an alternating power source such as a power grid G. In Figure 15, the power grid G is represented by three voltage sources each providing an alternating voltage Vga, Vgb, Vgc such as a sinusoidal voltage. Each of the voltage sources is connected to a respective one of the second nodes 13a, 13b, 13c through a respective inductor Lga, Lgb, Lgc. The inductors Lga, Lgb, Lgc may be part of an EMI filter, for example. Based on the grid voltages Vga, Vgb, Vgc each of the second stages 3a, 3b, 3c receives a respective input voltage Via, Vib, Vic between the further node 31a, 31b, 31c and the inductor node 32a, 32b, 32c. In the steady state of the power converter, the input voltages Via, Vib, Vic are strictly positive and are essentially given by an offset (a common voltage Vpn between a common node of the power grid and the second one 12 of the first nodes 11, 12) plus a respective one of the grid voltages Vga, Vgb, Vgc.

In the rectifier mode, the first nodes 11, 12 act as output nodes and are configured to provide a direct voltage Vout and a direct current Iout to a load. The load may be a battery (in this case, the output voltage Vout is essentially defined by the load and the output current can be regulated) or any other kind of DC load, including another power converter and a load connected thereto.

In the rectifier mode, each of the converter units 1 operates in a buck mode or a boost mode. A converter unit 1 operates in the buck mode whenever the output voltage Vout is lower than the respective input voltage Vi (wherein Vi represents any one of Via, Vib, Vic shown in Figure 15), and operates in the boost mode whenever the output voltage Vout is higher than the respective input voltage Vi. In the rectifier mode, the second stages 3 act as buck stages and the first stages 2 act as boost stages. The first and second stages may be implemented in the same way as illustrated in Figure 4.

In the rectifier mode, controller 5 may adjust input voltage references Via*, Vib*, Vic* based on the grid voltages Vga, Vgb, Vgc in order to regulate input currents Iga, Igb, Igc received from the power grid G and achieve a PFC (Power Factor Correction) functionality. In addition, the input voltage references Via*, Vib*, Vic* may be based on an error signal representing a deviation of the output voltage Vout from an output voltage reference Vout* in order to regulate the output voltage Vout.

In the rectifier mode, in each converter unit 1, the second stage 3 may be operated based on a duty-cycle d3r which is given by

$$d3r = \min(1, mr) \tag{11},$$

and the first stage 2 may be operated based on a duty-cycle d2r which is given by

$$d2r = \min(1, \frac{1}{mr}) \tag{12},$$

where mr denotes the modulation index of the respective converter unit 1 and is given by

$$mr = \frac{Vout}{Vi^*} \tag{13},$$

where Vi* denotes the respective input voltage reference.

Finally it should be noted that in the inverter mode as well as in the rectifier mode inductances connected to the second nodes 13a, 13b, 13c, such as load inductances Lza, Lzb, Lzc according to Figure 1 or filter inductances Lga, Lgb, Lgc according to Figure 15, in the buck mode, provide for a continuous current flow of currents Iza, Izb, Izc or Iga, Igb, Igc at the second nodes 13a, 13b, 13c.

Some of the aspects explained above are summarized in the following with reference to numbered examples.

Example 1. A power converter, including: first nodes; a plurality of second nodes; and a plurality of converter units, wherein each of the plurality of converter units includes: a first stage coupled to the first nodes and including a switch node of the first stage, a second stage coupled to a respective one of the second nodes and including a switch node of the second stage, and an inductor, wherein the switch node of the first stage is connected to the switch node of the second stage, and wherein the inductor is connected between an inductor node of the second stage and one of the first nodes.

Example 2. The power converter of example 1, wherein each of the first stages includes a first switch and a second switch connected in series between the first nodes, and wherein a circuit node common to the first switch and the second switch forms the switch node of the first stage.

Example 3. The power converter of example 1 or 2, wherein each of the second stages includes a first switch and a second switch connected in series between the respective one of the second nodes and the inductor node, and wherein a circuit node common to the first switch and the second switch forms the switch node of the second stage.

Example 4. The power converter of example 3, wherein each of the second stages further includes a capacitor connected between the respective one of the second nodes and the inductor node.

Example 5. The power converter of any one of examples 1 to 4, wherein the plurality of converter units includes exactly three converter units.

Example 6. The power converter according to any one of examples 1 to 5 further including: a controller configured to control operation of the converter units.

Example 7. The power converter according to example 6, wherein the controller, to control operation of the converter units, is configured to adjust voltage references for voltages between the second nodes and the inductor nodes, and to control the first stages and the second stages dependent on the voltage references and a measured voltage between the first nodes.

Example 8. The power converter according to example 6, wherein the controller, to control operation of the converter units, is further configured to generate correction values based on the measured inductor currents, and to control the first stages and the second stages further dependent on the correction values.

Example 9. The power converter according to example 6, wherein the controller, to control operation of the converter units, is configured to adjust a first switch node voltage reference for the first stage in each converter unit and a second switch node voltage reference for the second stage in each converter unit, and to control the first stages and the second stages dependent on the first and second switch node voltage references, a measured voltage between the first nodes, and measured voltages between the second nodes and the inductor nodes.

Example 10. The power converter according to example 9, wherein the controller, to adjust the first switch node voltage reference and the second switch node voltage reference in each converter unit is configured to adjust an inductor voltage reference.

Example 11. The power converter according to any one of examples 6 to 10, wherein the controller is configured to operate the power converter in an inverter mode.

Example 12. The power converter according to any one of examples 6 to 10, wherein the controller is configured to operate the power converter in a rectifier mode.

Example 13. A system, including: a power converter in accordance with any one of examples 1 to 12, and a load connected to the second nodes, wherein the load is configured to receive power from the power converter.

Example 14. A method, including: operating a power converter in accordance with any one of examples 1 to 11 in one of an inverter mode and a rectifier mode.

Example 15. The method of example 14, wherein operating the power converter in the inverter mode includes: connecting the first nodes to a power source configured to provide an input voltage, connecting the second nodes to a load, and operating the power converter to transfer power from the first nodes to the load at the second nodes.

Example 16. The method of example 15, wherein the load is a motor.

Example 17. The method of example 14, wherein the load is a power grid.

Example 18. The method of example 14, wherein operating the power converter in the rectifier mode includes: connecting the second nodes to a power source configured to provide supply voltages, connecting the first nodes to a load, and operating the power converter to transfer power from the second nodes to the first nodes.

**Claims**

1. A power converter, comprising:

first nodes (11, 12);
a plurality of second nodes (13a, 13b, 13c); and
a plurality of converter units (1a, 1b, 1c),
wherein each of the plurality of converter units (1a, 1b, 1c) comprises:

a first stage (2a, 2b, 2c) coupled to the first nodes (11, 12) and comprising a switch node (23a, 23b, 23c) of the first stage (2a, 2b, 2c),
a second stage (3a, 3b, 3c) coupled to a respective one of the second nodes (13a, 13b, 13c) and comprising a switch node (33a, 33b, 33c) of the second stage (3a, 3b, 3c), and
an inductor (4a, 4b, 4c),
wherein the switch node (23a, 23b, 23c) of the first stage (2a, 2b, 2c) is connected to the switch node (33a, 33b, 33c) of the second stage (3a, 3b, 3c), and
wherein the inductor (4a, 4b, 4c) is connected between an inductor node (32a, 32b, 32c) of the second stage (3a, 3b, 3c) and one of the first nodes (11, 12).

2. The power converter of claim 1,

wherein each of the first stages (2a, 2b, 2c) includes a first switch (24a, 24b, 24c) and a second switch (25a, 25b, 25c) connected in series between the first nodes (11, 12), and
wherein a circuit node common to the first switch (24a, 24b, 24c) and the second switch (25a, 25b, 25c) forms the switch node (23a, 23b, 23c) of the first stage (2a, 2b, 2c).

3. The power converter of claim 1 or 2,

wherein each of the second stages (3a, 3b, 3c) includes a first switch (34a, 34b, 34c) and a second switch (35a, 35b, 35c) connected in series between the respective one of the second nodes (13a, 13b, 13c) and the inductor node (32a, 32b, 32c), and
wherein a circuit node common to the first switch (34a, 34b, 34c) and the second switch (35a, 35b, 35c) forms the switch node (33a, 33b, 33c) of the second stage (3a, 3b, 3c).

4. The power converter of claim 3,
wherein each of the second stages (3a, 3b, 3c) further includes a capacitor (36a, 36b, 36c) connected between the respective one of the second nodes (13a, 13b, 13c) and the inductor node (32a, 32b, 32c).

5. The power converter of any one of claims 1 to 4,
wherein the plurality of converter units (1a, 1b, 1c) comprises exactly three converter units.

6. The power converter according to any one of the preceding claims further comprising:
a controller (5) configured to control operation of the converter units (1a, 1b, 1c).

7. The power converter according to claim 6,

wherein the controller (5), to control operation of the converter units (1a, 1b, 1c), is configured
to adjust voltage references (Voa*, Vob*, Voc*; Via*, Vib*, Vic*) for voltages (Voa, Vob, Voc; Via, Vib, Vic) between the second nodes (13a, 13b, 13c) and the inductor nodes (32a, 32b, 32c), and
to control the first stages (2a, 2b, 2c) and the second stages (3a, 2b, 3c) dependent on the voltage references (Voa*, Vob*, Voc*; Via*, Vib*, Vic*) and a measured voltage (Vin'; Vout') between the first nodes (11, 12).

8. The power converter according to claim 6,

wherein the controller (5), to control operation of the converter units (1a, 1b, 1c), is further configured to generate correction values (Vcorr) based on the measured inductor currents (14'), and to control the first stages (2a, 2b, 2c) and the second stages (3a, 2b, 3c) further dependent on the correction values (Vcorr).

9. The power converter according to claim 6,

wherein the controller (5), to control operation of the converter units (1a, 1b, 1c), is configured to adjust a first switch node voltage reference (V2a*, V2b*, V2c*) for the first stage (2a, 2b, 2c) in each converter unit (1a, 1b, 1c) and a second switch node voltage reference (V3a*, V3b*, V3c*) for the second stage (3a, 3b, 3c) in each converter unit (1a, 1b, 1c), and to control the first stages (2a, 2b, 2c) and the second stages (3a, 2b, 3c) dependent on the first and second switch node voltage references (V2a*, V2b*, V2c*, V3a*, V3b*, V3c*), a measured voltage (Vin') between the first nodes (11, 12), and measured voltages (Voa', Vob', Voc') between the second nodes (13a, 13b, 13c) and the inductor nodes (32a, 32b, 32c).

10. The power converter according to claim 9, wherein the controller (5), to adjust the first switch node voltage reference (V2a*, V2b*, V2c*) and the second switch node voltage reference (V3a*, V3b*, V3c*) in each converter unit (1a*, 1b*, 1c*) is configured to adjust an inductor voltage reference (V4*).

11. The power converter according to any one of claims 6 to 10, wherein the controller (5) is configured to operate the power converter in an inverter mode.

12. The power converter according to any one of claims 6 to 10, wherein the controller (5) is configured to operate the power converter in a rectifier mode.

13. A system, comprising:

a power converter in accordance with any one of claims 1 to 12, and a load (Z) connected to the second nodes (13a, 13b, 13c), wherein the load (Z) is configured to receive power from the power converter.

14. A method, comprising: operating a power converter in accordance with any one of claims 1 to 11 in one of an inverter mode and a rectifier mode.

15. The method of claim 14, wherein operating the power converter in the inverter mode comprises:

connecting the first nodes (11, 12) to a power source configured to provide an input voltage (Vin), connecting the second nodes (13a, 13b, 13c) to a load (Z), and operating the power converter to transfer power from the first nodes (11, 12) to the load (Z) at the second nodes (13a, 13b, 13c).

FIG 1

FIG 2

FIG 3

FIG 4

FIG 5

FIG 6

S24a  S25a  S34a  S35a      S24b  S25b  S34b  S35b      S24c  S25c  S34c  S35c

5

| CONTROL UNIT 51a | CONTROL UNIT 51b | CONTROL UNIT 51c |

Voa*              Vob*              Voc*

CONTROLLER

## FIG 7

6

$\omega z^*$ + 61

− $\omega z'$

MOTOR CONTROLLER 62

Vza*  + 63a  Voa*
      +
      Voffs

Vzb*  + 63b  Vob*
      +
      Voffs

Vzc*  + 63c  Voc*
      +
      Voffs

## FIG 8

51

DUTY-CYCLE
GENERATOR
54

Vo* →

Vin' →

d2 → PWM 52 → S24
→ S25

d3 → PWM 53 → S34
→ S35

FIG 9

54

541                    542

542

Vo* → [÷] — m → | d2 = min(1, m)  | → d2
                   | d3 = min(1, 1/m) | → d3

Vin'

## FIG 10

54

543        545

Vo* → $\dfrac{Vin'}{0}$ — S543 → [÷] → d2

Vin'

544        546

Vin' → $\dfrac{Vo*}{0}$ — S544 → [÷] → d3

Vo*

## FIG 11

FIG 12

FIG 13

FIG 14

FIG 15

Europäisches
Patentamt

European
Patent Office

Office européen
des brevets

## EUROPEAN SEARCH REPORT

Application Number

EP 22 15 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDULSLAM ABDULLAH ET AL: "A Passive-Stacked Third-Order Buck Converter With Inherent Input Filtering Achieving 0.7-W/mm $^{2}$ Power Density and 94% Peak Efficiency", IEEE SOLID-STATE CIRCUITS LETTERS, IEEE, vol. 2, no. 11, 1 November 2019 (2019-11-01), pages 240-243, XP011758707, DOI: 10.1109/LSSC.2019.2935563 [retrieved on 2019-11-25] * the whole document * * * Cited on page 1 of document D2 (XP011909189, belonging to the applicant) * | 1-15 | INV. H02M1/00 H02M3/158 H02M7/5387 |
| | ----- | | |
| T | MENZI DAVID ET AL: "New Return Path Inductor Buck-Boost Y-Inverter Motor Drive With Reduced Current Stresses", IEEE TRANSACTIONS ON POWER ELECTRONICS, INSTITUTE OF ELECTRICAL AND ELECTRONICS ENGINEERS, USA, vol. 37, no. 9, 30 March 2022 (2022-03-30) , pages 10086-10090, XP011909189, ISSN: 0885-8993, DOI: 10.1109/TPEL.2022.3163465 [retrieved on 2022-03-30] * the whole document * * | | |
| | ----- | | TECHNICAL FIELDS SEARCHED (IPC) |
| | -/-- | | H02M |

The present search report has been drawn up for all claims

| Place of search | Date of completion of the search | Examiner |
|---|---|---|
| The Hague | 7 July 2022 | Standaert, Frans |

EPO FORM 1503 03.82 (P04C01)

**page 1 of 2**

Europäisches
Patentamt

European
Patent Office

Office européen
des brevets

# EUROPEAN SEARCH REPORT

Application Number

EP 22 15 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANTIVACHIS MICHAEL ET AL: "Comparative Evaluation of Y-Inverter against Three-Phase Two-Stage Buck-Boost DC-AC Converter Systems", 2018 INTERNATIONAL POWER ELECTRONICS CONFERENCE (IPEC-NIIGATA 2018 -ECCE ASIA), IEEJ INDUSTRY APPLICATION SOCIETY, 20 May 2018 (2018-05-20), pages 181-189, XP033428554, DOI: 10.23919/IPEC.2018.8507664 [retrieved on 2018-10-24] * abstract *; figure 2 * <br> ----- | 1-15 | |

TECHNICAL FIELDS
SEARCHED (IPC)

The present search report has been drawn up for all claims

| Place of search | Date of completion of the search | Examiner |
|---|---|---|
| The Hague | 7 July 2022 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2